# EUROPEAN PATENT APPLICATION

(11) **EP 4 814 683 A1**
(43) Date of publication of application: **30.09.2026**
(21) Application number: 26165066.7
(22) Date of filing: 16.03.2026
(51) Int. Cl.: G06F 3/04883

(54) **DISPLAY APPARATUS**

(30) Priority: 25.03.2025 JP 2025049357
(71) Applicant: Alps Alpine Co., Ltd., Ota-ku, Tokyo 145-8501 (JP)
(72) Inventor: Yamamoto, Ryo, Iwaki-city Fukushima (JP); Ito, Koya, Iwaki-city Fukushima (JP); Mizuno, Tetsuya, Iwaki-city Fukushima (JP)
(74) Representative: Schmitt-Nilson Schraud Waibel Wohlfrom Patentanwälte Partnerschaft mbB

(57) **Abstract**

A display apparatus includes: a decorative sheet that is transparent; and a display unit arranged on a back side of the decorative sheet. The display unit includes a display panel configured to display an image on a screen; a detector configured to detect an operator operation on the display panel; and control circuitry. The control circuitry controls a display of the display panel such that luminance of a boundary area of the screen is reduced upon an operation for shifting the display of the screen being detected by the detector.

## Description

The present application is based on and claims priority to Japanese Patent Application No. 2025-049357 filed on March 25, 2025.

The present disclosure relates to a display apparatus, and more particularly to a decorative display in which a decorative sheet or decorative film that is transparent is mounted on a display unit.

The decorative display is formed by arranging a liquid crystal display (LCD) module, an organic EL module, or the like under a light-transmitting sheet called a transparent decorative sheet that is decorated. The decorative sheet is provided with, for example, a design such as woodgrain or metallic, and when the LCD module is turned off (when the power supply is turned off), the design such as the woodgrain of the decorative sheet is visible, and when an image is displayed on the LCD module, the image of the LCD module appears to emerge. Furthermore, by embedding a touch panel in the LCD module, screen operation can be performed.
The present disclosure relates to a display apparatus according to the appended claims. Embodiments are disclosed in the dependent claims.

The display apparatus according to an aspect of the present disclosure includes: a decorative sheet that is transparent; and a display unit arranged on a back side of the decorative sheet, wherein the display unit includes a display panel configured to display an image on a screen, a detector configured to detect an operator operation on the display panel, and control circuitry, and wherein the control circuitry controls the display of the display panel such that luminance of a boundary area of the screen is reduced upon an operation for shifting the display of the screen being detected by the detector.
FIG. 1A is a schematic plan view of an existing decorative display;
FIG. 1B is a schematic cross-sectional view of the existing decorative display taken along a line A-A of FIG. 1A;
FIG. 2A is a diagram schematically illustrating an exemplary state in which GUI information is displayed on an LCD panel;
FIG. 2B is a diagram schematically illustrating an exemplary state in which the display on a screen of the LCD panel is shifted leftward by a swipe operation;
FIG. 3 is a diagram illustrating a schematic configuration of a decorative display according to an embodiment of the present disclosure;
FIG. 4A is a diagram illustrating a display example of the GUI information on the screen of the LCD panel;
FIG. 4B is a diagram illustrating a display example when the transparency of a decorative sheet in a boundary area on a left side of the screen of the LCD panel is changed;
FIG. 5 is a diagram illustrating a specific example of setting the transparency of the decorative sheet in the boundary area of the LCD panel;
FIG. 6A is a diagram illustrating a display example of the existing LCD panel, when the screen is shifted to the left by a swipe operation;
FIG. 6B is a diagram illustrating a display example of the LCD panel of the present embodiment when the screen is shifted to the left by a swipe operation; and
FIG. 7 is a flowchart illustrating an operation flow of seamless boundary processing in the decorative display according to an embodiment.

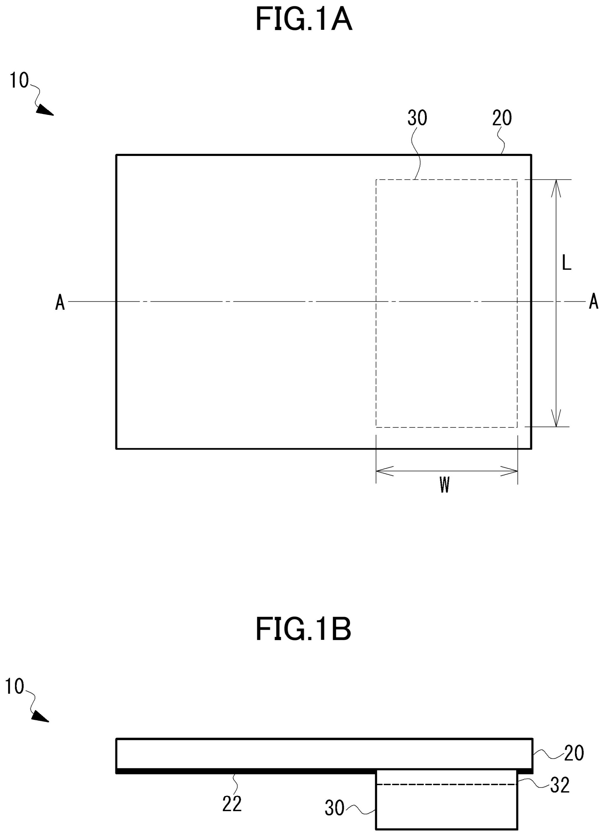

FIG. 1A is a schematic plan view of an existing decorative display. FIG. 1B is a schematic cross-sectional view of the existing decorative display taken along a line A-A of FIG. 1A. A decorative display 10 includes a rectangular decorative sheet 20 and a rectangular LCD panel 30 arranged on a back side of the decorative sheet 20. When the length in a vertical direction of the LCD panel 30 is L and the width in a horizontal direction is W, the decorative sheet 20 is larger in size than a length L and width W of the LCD panel 30, and is arranged on a surface of the LCD panel 30 to cover the entire panel. On a rear surface side of the decorative sheet 20 where the LCD panel 30 is not arranged, a light shielding part 22 such as black ink is provided such that light does not pass through. A capacitive touch panel 32, for example, is incorporated on the upper surface of the LCD panel 30, and an operator can perform an input on an image displayed on the LCD panel 30 from the front surface of the decorative sheet 20. A backlight as a light source is arranged on the rear surface of the LCD panel 30.

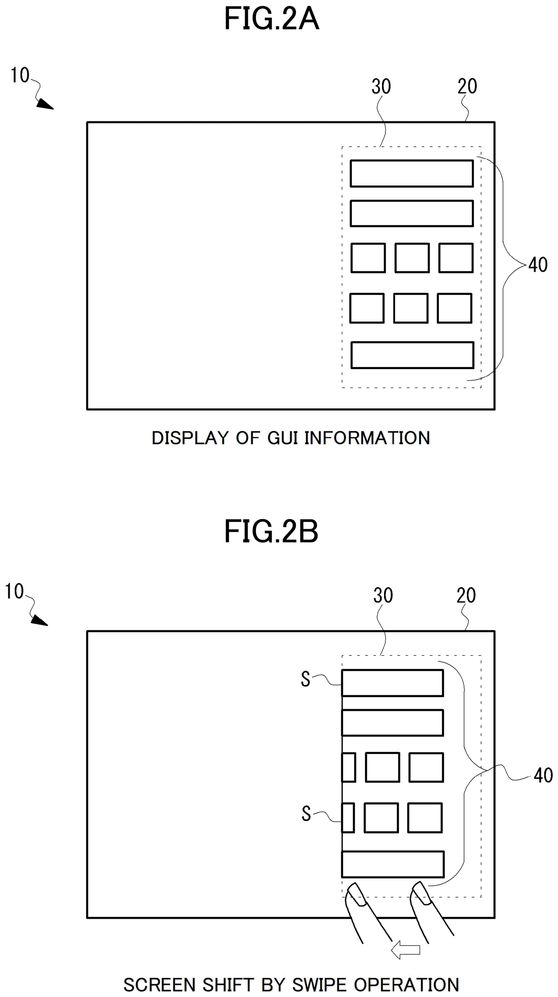

FIG. 2A is a diagram schematically illustrating a state where the LCD panel displays graphical user interface (GUI) information on a screen, and FIG. 2B is a diagram schematically illustrating a state where the operator shifts the display of the screen to the left by a swipe operation. When the power of the LCD panel 30 is turned off, that is, when the screen of the LCD panel 30 is black, the operator can see a design such as the woodgrain of the decorative sheet 20 irradiated by external light. When the power of the LCD panel 30 is turned on, the screen of the LCD panel 30 becomes bright, and GUI information 40 is displayed as illustrated in FIG. 2A. The GUI information 40 appears on the decorative sheet 20, and the operator can see the GUI information 40 through the decorative sheet 20. The GUI information 40 is, for example, information such as icons, buttons, and switches used to input information by a touch operation.

When the operator shifts the display of the screen to the left by a swipe operation while the GUI information 40 is displayed, display of the GUI information 40 is cut off at a boundary S of the screen as illustrated in FIG. 2B, such that the LCD panel 30 or the boundary S of the screen is clearly seen. When the boundary S of the LCD panel 30 or the screen is clearly seen, the design (e.g. woodgrain) of the decorative sheet 20 is compromised and the appearance becomes poor.

It is an object of the present disclosure to provide a display apparatus which solves such existing issues and makes it difficult to see the boundary of the display panel or the screen arranged on the back side of the decorative sheet.

Next, embodiments of the present disclosure will be described. In a present embodiment, the display apparatus includes: a decorative sheet or decorative film that is transparent; and a display unit including an LCD panel or an organic EL panel on a rear side of the decorative sheet or decorative film that is transparent. The decorative sheet is provided with a design such as woodgrain or metallic; and the design is harmonized with the environment of, for example, a dashboard or an instrument panel of a vehicle to which the display apparatus is installed. It should be noted that the drawings referred to in the following description of the embodiments include exaggerated representations to facilitate understanding of the disclosure and do not represent the shape or scale of an actual product.

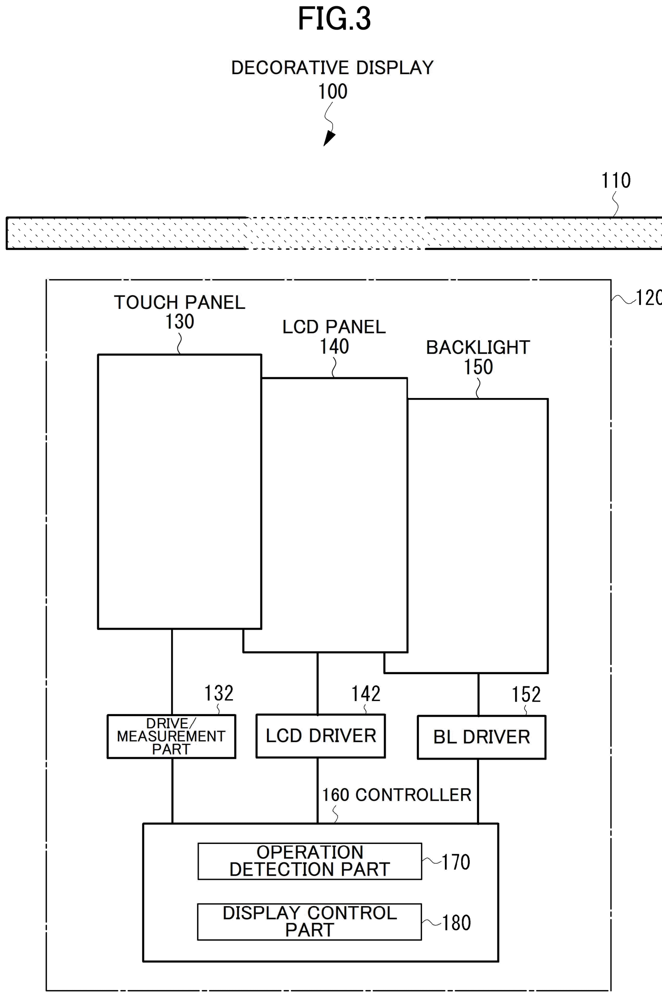

Next, embodiments of the present disclosure will be described with reference to the drawings. FIG. 3 is a diagram illustrating a schematic configuration of a decorative display according to a present embodiment. A decorative display 100 according to the present embodiment includes a transparent decorative sheet 110 and an LCD module 120 arranged on a back side of the decorative sheet 110, and a physical arrangement of the transparent decorative sheet 110 and LCD module 120 is similar to the arrangement as illustrated in FIG. 1 described in the explanation of the existing technique.

The material and configuration of the decorative sheet 110 are not particularly limited. However, for example, a sheet obtained by printing or depositing a design on a transparent sheet or laminating a decorative sheet on a transparent sheet may be used. A light-shielding portion such as a black ink is provided on the back side of the decorative sheet 110 where the LCD module 120 is not arranged such that light does not pass through. The decorative sheet 110 may have any planar shape and size, as long as the decorative sheet is of a size sufficient to cover at least the LCD module 120.

The LCD module 120 includes a touch panel 130, an LCD panel 140, and a backlight 150. The touch panel 130 is, for example, a capacitive sensor, and is configured to detect a touch operation by an operator by measuring a change in capacitance at an intersection of an X-side electrode and a Y-side electrode arranged in a grid shape.

The LCD panel 140 includes a glass substrate sandwiching a liquid crystal, a color filter arranged on an upper surface side of the glass substrate, a thin film transistor (TFT) array arranged on a rear surface side of the glass substrate for controlling each pixel, a polarizing plate, and the like. The backlight 150 is, for example, formed of an edge-type or direct-type LED, and irradiates the LCD panel 140 from the rear surface side of the LCD panel 140.

The LCD module 120 further includes a drive/measurement part 132 electrically connected to the touch panel 130, an LCD driver 142 electrically connected to a TFT array of the LCD panel 140, a BL driver 152 electrically connected to the backlight 150, and a controller 160 configured to control the above drive units. The drive/measurement part 132 sequentially applies a drive signal to the X-side electrode, sequentially measures a signal corresponding to a capacitance from the Y-side electrode, and measures a capacitance at an intersection point between the X-side electrode and the Y-side electrode, for example. A measurement result of the drive/measurement part 132 is provided to the controller 160. The LCD driver 142 drives the TFT array based on image data from the controller 160, and controls the display of each pixel of the LCD panel 140. The BL driver 152 turns on the backlight 150 when the power to the LCD module 120 is turned on.

The controller 160 includes hardware resources and software resources, and includes, for example, a microcontroller including a ROM/RAM, a microprocessor, an image processing processor, a memory, and the like, and executes a software program stored in the ROM/RAM. In one aspect, the controller 160 includes an operation detection part 170 and a display control unit 180. The operation detection part 170 detects an operation (for example, touch position and swipe operation) on the touch panel 130 based on a measurement result received from the drive/measurement part 132. A detection result by the operation detection part 170 is provided to the display control unit 180.

The display control unit 180 drives the TFT array via the LCD driver 142 based on the image data, and causes the pixels of the LCD panel 140 to display an image. The display control unit 180 also performs display control according to the operator operation detected by the operation detection part 170. For example, when an input to an icon or a button displayed on the LCD panel 140 is detected, another menu screen is displayed according to the input, or when a swipe operation for shifting the display of the screen of the LCD panel 140 is detected, display control is performed as the seamless boundary processing such that the boundary of the screen becomes difficult to be recognized.

Next, a seamless boundary processing according to the present embodiment will be described in detail. The seamless boundary processing means that the boundary of the LCD panel 140 or its screen becomes difficult to be recognized when the display of the screen is shifted by a swipe operation.

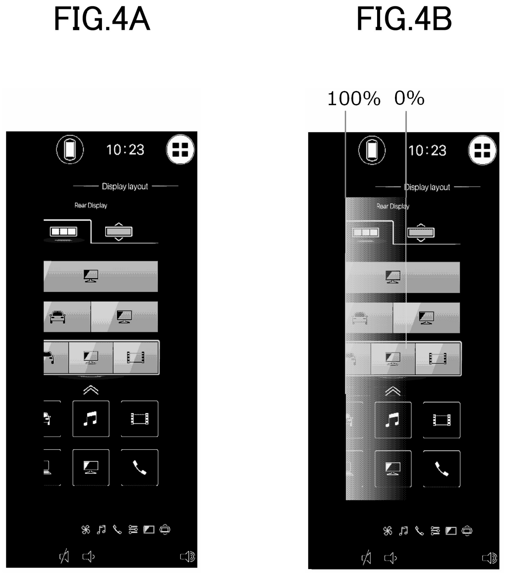

FIG. 4A is a diagram illustrating a display example in which GUI information such as icons are displayed on the LCD panel 140. The GUI information displayed on the LCD panel 140 is illuminated by the backlight 150 to be displayed as a bright image, and the operator can see the GUI information emerging through the decorative sheet.

In contrast to this, FIG. 4B is a display example of the GUI information when the transparency of the decorative sheet is gradually changed in the boundary area on the left side of the screen of the LCD panel 140. The transparency is set to vary from column to column in the boundary area. A high transparency percentage means that the GUI information is displayed to be dark and thus difficult to see; however, the decoration of the decorative sheet can be readily seen by outside light. A low transparency means that the GUI information is brightly displayed so as to be readily seen; however, the decoration of the decorative sheet is difficult to see.

In the present embodiment, the boundary of the screen at the time of a screen shift by a swipe operation becomes difficult to be recognized by changing the transparency of the decorative sheet in the boundary area of the LCD panel 140 as the seamless boundary processing. That is, when the swipe operation is detected, by increasing the transparency of the decorative sheet in the boundary area of the screen of the LCD panel 140, the GUI information is darkened and becomes difficult to be recognized, and the boundary of the LCD panel 140 or screen of the LCD panel 140 is made difficult to be seen. In addition, by adding gradation to the transparency (changing the transparency gradually), the boundary of the screen can be hidden more naturally.

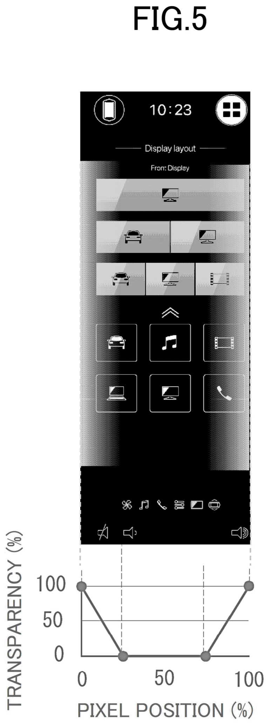

FIG. 5 is a specific example of setting the transparency of the decorative sheet in the boundary area of the LCD panel. In this case, it is assumed that the screen of the LCD panel 140 can be shifted in a left-right direction by the swipe operation. The graph in FIG. 5 shows the relationship between pixel positions in the horizontal direction (width direction) of the screen of the LCD panel 140 and the transparency. In the left boundary area (where the percentage of the pixel position indicated by an X-axis is within a range from 0% to 25%), the transparency gradually decreases from 100% to 0% toward the center. Conversely, in the right boundary area (where the pixel position indicated by the X-axis is within a range from 75% to 100%), the transparency gradually increases from 0% to 100% toward the right boundary. These relationships can be expressed as follows.
x: Pixel position on the LCD panel (%)
y: Transparency (%)

(1) Left boundary area (pixel position of 0% to 25%) $y = - 4 x + 100$
(2) Center area $y = 0$
(3) Right boundary area (pixel position of 75% to 100%) $y = 4 x - 300$

The transparency is set in the above by changing the luminance of the image data of the pixels in each column of the boundary area. When the transparency is 100%, image processing is performed such that the luminance of the image data of all the pixels in the corresponding column becomes 0%. In this case, the image data representing one pixel includes R, G, and B data, and R, G, and B values are scaled down at the same rate. That is, R × k, G × k, and B × k, where a multiplication coefficient k = 0. In the case of a normally-black-mode LCD panel, the color of the LCD panel when the luminance is 0% is black, which is the same color as the black ink used in the light-shielding portion arranged around the LCD panel.

When the transparency is 50%, the image processing is performed such that the luminance of the image data of all pixels in the corresponding column becomes 50%. That is, R × k, G × k, and B × k, where the multiplication coefficient k = 0.5. When the transparency is 0%, the luminance of the image data of all pixels in the corresponding column is 100%. That is, R × k, G × k, and B × k, where the multiplication coefficient k = 1. In other words, the image processing is not performed for the seamless boundary processing.

Note that the setting of the transparency described above is an example, and the setting can be changed appropriately. For example, the gradual change of the transparency need not necessarily be changed linearly, but may be in a stepwise or curvilinear manner. Furthermore, the transparency is not necessarily limited to a change within a range from 100% to 0%, but may be changed within a range from, for example, 90% to 10%. Furthermore, in the above setting, the left boundary area is set at the pixel position that is within a range from 0% to 25%, and the right boundary area is set at the pixel position that is within a range from 75% to 100%. However, this is also an example, and the range of the boundary area can be changed appropriately.

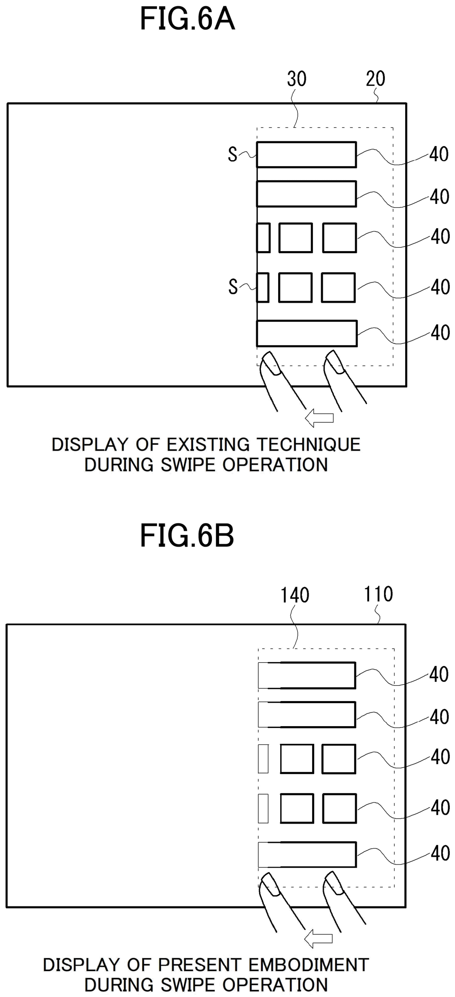

FIG. 6A is a diagram illustrating a display example of the existing LCD panel when a screen is shifted by the swipe operation. FIG. 6B is a diagram illustrating a display example of the LCD panel according to the present embodiment when the screen is shifted by the swipe operation. In the existing LCD panel, when the screen is shifted in the left direction by the swipe operation, a display of the GUI information 40 is interrupted at a left boundary S of the screen, such that the boundary of the LCD panel 30 or the screen becomes conspicuous. In contrast to this, in the present embodiment, when the screen is shifted in the left direction by the swipe operation, the display of the GUI information 40 gradually darkens in the left boundary area of the screen, such that the boundary of the LCD panel 140 or the screen becomes difficult to be recognized.

In this example, the screen is shifted to the left side, but when the screen is shifted to the right side by the swipe operation, seamless boundary processing is performed such that the display of the GUI information 40 in the boundary area on the right side of the screen gradually darkens. When the screen is shifted in the vertical direction by the swipe operation, seamless boundary processing is performed such that the display of the GUI information 40 gradually darkens in the boundary area in the vertical direction in which the screen is shifted.

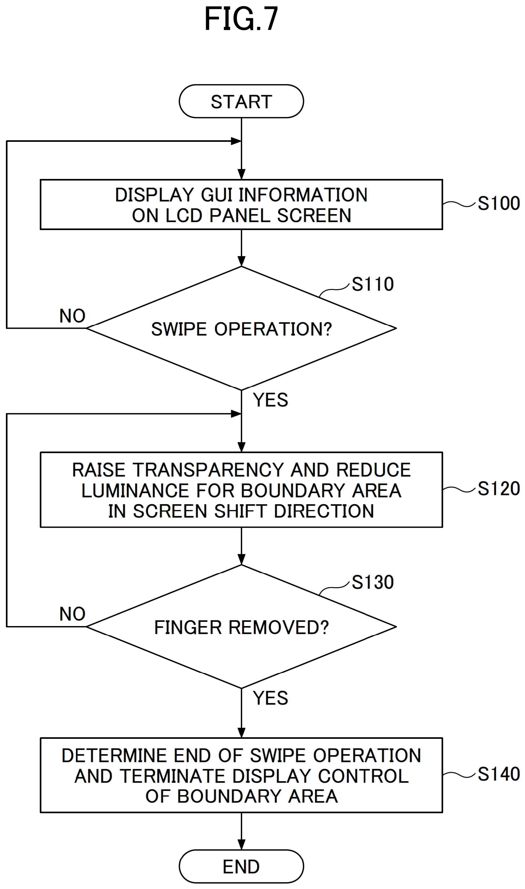

FIG. 7 is a flowchart illustrating an operation flow of the seamless boundary processing in the decorative display of the present embodiment. When GUI information is displayed on the screen of the LCD panel 140 (S100), the controller 160 starts the operation of the seamless boundary processing. The operation detection part 170 receives a measurement result from the touch panel 130 via the drive/measurement part 132, and detects the presence or absence of the swipe operation on the touch panel 130 based on the measurement result (S110). When the operation detection part 170 detects the swipe operation, the display control unit 180 controls the display of the LCD panel 140 to reduce the luminance of the boundary area with respect to the direction in which the display of the screen is to be shifted by the swipe operation (S120). For example, when the screen shifts to the left side by the swipe operation, the display control unit 180 performs image processing to reduce the luminance of the boundary area on the left side of the screen, and increases the transparency of the decorative sheet in the boundary area. This seamless boundary processing is continued until the touch of the finger is not detected from the touch panel 130 by the operation detection part 170 (S130). When it is detected that the finger is removed from the touch panel 130, the display control unit 180 determines that the swipe operation is completed, and terminates the display control by the seamless boundary processing (S140).

As described above, it is possible to make the boundary of the LCD panel or its screen difficult to be recognized when a swipe operation is performed on the decorative display. As a result, it is difficult for the operator to recognize the LCD panel on a lower side when operating the decorative display, and thus, the designability (woodgrain design) of the decorative display can be maintained.

Although the LCD panel is exemplified as the decorative display in the above embodiment, the present disclosure is not limited to this, and the decorative display may include an organic EL panel or a micro LED panel.

According to the present disclosure, by performing the display control such that the luminance of the boundary area of the screen is reduced when the operation for shifting the display of the screen is performed, the boundary of the screen is made difficult to distinguish, thereby preventing the design of the decorative sheet from being compromised.

Although preferred embodiments of the present invention have been described in detail above, the present invention is not limited to specific embodiments, and various modifications and changes are possible within the scope of the appended claims.

## Claims

1. A display apparatus, comprising:
a decorative sheet that is transparent; and
a display unit arranged on a back side of the decorative sheet, wherein
the display unit includes
a display panel configured to display an image on a screen;
a detector configured to detect an operator operation on the display panel; and
control circuitry, and
the control circuitry is configured to control a display of the display panel such that luminance of a boundary area of the screen is reduced upon an operation for shifting the display of the screen being detected by the detector.

2. The display apparatus according to claim 1, wherein
the control circuitry is configured to control the display in the boundary area, the boundary area being arranged in a direction in which the display of the screen is shifted.

3. The display apparatus according to claim 1 or 2, wherein
the control circuitry is configured to control the display such that the luminance of the boundary area has a gradation.

4. The display apparatus according to one of claims 1 to 3, wherein
the control circuitry is configured to perform image processing such that the luminance of image data of each pixel in the boundary area is reduced.

5. The display apparatus according to one of claims 1 to 4, wherein
the control circuitry is configured to control the display of the display panel such that transparency of the decorative sheet in the boundary area is increased.

6. The display apparatus according to one of claims 1 to 5, wherein
the control circuitry is configured to terminate the control of the display in the boundary area upon the operation on the screen being no longer detected by the detector.
